(19) Europäisches Patentamt
European Patent Office
Office européen des brevets

(11) **EP 2 910 919 B1**

(12) **EUROPEAN PATENT SPECIFICATION**

(45) Date of publication and mention
of the grant of the patent:
**11.04.2018   Bulletin 2018/15**

(51) Int Cl.:
***G01L 13/06*** *(2006.01)*        ***G01L 19/04*** *(2006.01)*

(21) Application number: **15156153.7**

(22) Date of filing: **23.02.2015**

(54) **Pressure sensing device and method for manufacturing such a device**

Druckmessvorrichtung und Verfahren zu ihrer Herstellung

Dispositif de détection de pression et procédé de fabrication d'un tel dispositif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2014   NL 2012304**

(43) Date of publication of application:
**26.08.2015   Bulletin 2015/35**

(73) Proprietor: **Sencio B.V.**
**6534 AT Nijmegen (NL)**

(72) Inventor: **Raben, Jurgen Leonardus Theodorus Maria**
**6545 CL Nijmegen (NL)**

(74) Representative: **Nederlandsch Octrooibureau**
**P.O. Box 29720**
**2502 LS The Hague (NL)**

(56) References cited:
**WO-A1-00/37912        US-A1- 2003 107 096**
**US-A1- 2011 192 236**

**Description**

**Field of the invention**

The present invention relates to a pressure sensing device. Also, the invention relates to a method for manufacturing such a device.

**Prior art**

Pressure sensors are devices for measuring a pressure of a fluid such as gas or a liquid. Typically the pressure sensor comprises a sensing area that is in communication with the pressurized fluid and an electric/electronic circuitry that monitors a state of the sensing area associated with the pressure and accordingly generates a signal proportional to the pressure. Such a signal can be either analog or digital depending on the type of the circuitry.

The use of semiconductor materials and of semiconductor processing allows to produce semiconductor based pressure sensors with sizes comparable to those of semiconductor devices. As a result pressure sensors have become available in integrated circuit type packages: i.e. the semiconductor based pressure sensor is arranged on a lead frame, in a ceramic carrier or in a premoulded plastic package. The circuitry is (wire) bonded to individual pins of the lead frame. The arrangement of pressure sensor and lead frame is embedded in a plastic or ceramic housing. This process is often referred to as packaging. Typically, the embedding process involves a process at elevated temperature.

As a result of the packaging process, a mechanical stress may be introduced into the semiconductor based pressure sensor. Because of differences in thermal expansion (or volume change) of the packaging material and the semiconductor material, a thermal mechanical stress is introduced which may affect the sensing area of the pressure sensor.

Due to the presence of stress, the response of the sensing area to the pressurized fluid may be different from the response in a state free of stress which may be harmful to the accuracy of the pressure sensor.

In the prior art some solutions to this problem have been presented that aim to compensate the thermal stress on the level of components of the pressure sensor by means of creating a compensating stress on the sensor components.

US 8402835 discloses a compensation of stress effects on pressure sensor components with reduced variations due to stresses caused by various layers and components that are included in the manufacturing process. In one example, a first stress in a first direction causes a variation in a component. A second stress in a second direction is applied, thereby reducing the variation in the component. The first and second stresses may be caused by a poly-silicon layer, while the component may be a resistor in a Wheatstone bridge.

WO 2000037912 discloses a semiconductor pressure sensor compatible with fluid and gaseous media applications. The semiconductor pressure sensor includes a sensor capsule having a semiconductor die and a silicon cap that is bonded to the semiconductor die. The semiconductor die includes a diaphragm that incorporates piezo-resistive sensors thereon, and a stress isolation mechanism for isolating the diaphragm from packaging and mounting stresses.

The prior art may have the disadvantage that compensation may be complex and relatively costly since such a compensating stress should substantially counterbalance the stress on the pressure sensor and therefore requires a dedicated and controlled mechanism.

It is an object of the present invention to provide an alternative compensation, which overcomes the disadvantages from the prior art.

**Summary of the invention**

In accordance with the object, the present invention provides a pressure sensing device with a sensor arrangement comprising a first pressure sensor, at least a second pressure sensor and a support, each sensor being substantially identical and being surface-mounted onto the support; the sensor arrangement being embedded in an encapsulating package, wherein the encapsulating package is provided with at least a first opening channel that is in communication with a sensing area of the first pressure sensor, and further comprising a covering connector mounted over the encapsulating package, the covering connector comprising at least a first nozzle, arranged, when mounted, at a position corresponding with a surface position of the first opening channel on the package, to have a fluidic communication between the first nozzle and the first opening channel in the encapsulating package.

Since both the first and second pressure sensors are substantially identical and are exposed to substantially the same conditions inside the package, the stress on both pressure sensors and their components would be the same. It is assumed that therefore the pressure measurement in each pressure sensor is affected in the same manner. Thus, by determining the difference in the signals generated by the first and second pressure sensor, the deviation is cancelled.

In an embodiment, the first and at least second pressure sensor are arranged substantially symmetrically relative to a centre of the package.

Such an arrangement takes into account a dependence of the mechanical stress field relating to a position on the package. By a substantially symmetrical arrangement of the pressure sensors the mechanical stress field can still be compensated.

According to an aspect of the invention there is provided a pressure sensing device as described above, comprising an integrated circuitry, wherein the first pressure sensor is connected to a first input and the second pressure sensor being connected to a second input respectively of the integrated circuitry;

and the integrated circuitry is configured to determine a difference signal from a first pressure based electric signal from the first pressure sensor received at the first input and a second pressure based electric signal from the second pressure sensor received at the second input.

According to an aspect of the invention there is provided a pressure sensing device as described above, wherein the integrated circuitry is arranged on the support.

According to an aspect of the invention there is provided a pressure sensing device as described above, wherein the integrated circuitry is remote from the encapsulating package.

According to an aspect of the invention there is provided a pressure sensing device as described above, wherein the first and at least second pressure sensors are arranged symmetrically relative to a centre of the support, and the centre of the support substantially coincides with the centre of the package.

According to an aspect of the invention there is provided a pressure sensing device as described above, wherein the second pressure sensor is provided with a closed space between a glass cover and the sensing area, the closed space being arranged at low pressure, substantially vacuum.

According to an aspect of the invention there is provided a pressure sensing device as described above, wherein the first pressure sensor is provided with a glass cover covering the sensing area of the first pressure sensor, the glass cover being provided with a hole in such a way that the sensing area is in communication with the first opening channel.

According to an aspect of the invention there is provided a pressure sensing device as described above, wherein the encapsulating package is provided with a second opening channel that is in communication with an exterior surface of the glass cover of the second pressure sensor.

According to an aspect of the invention there is provided a pressure sensing device as described above, wherein the encapsulating package is provided with a second opening channel that is in communication with a sensing area of the second pressure sensor.

According to an aspect of the invention there is provided a pressure sensing device as described above, wherein the opening channel has or the opening channels have a width equal to or smaller than a sensing area size of the first and/or at least second sensor.

According to an aspect of the invention there is provided a pressure sensing device as described above, wherein the covering connector comprises a second nozzle, arranged, when mounted, at a position corresponding with a surface position of the second opening channel on the package, to have a fluidic communication between the second nozzle and the second opening channel in the encapsulating package.

According to an aspect of the invention there is provided a pressure sensing device as described above, wherein the covering connector comprises clamping means for creating a clamping connection of the cover on the pressure sensing device.

According to an aspect of the invention there is provided a pressure sensing device as described above, wherein a sealing inbetween the covering connector and the package is realized by a sealing means comprising an O-ring, a glue layer or a sealant layer.

According to an aspect of the invention there is provided a pressure sensing device as described above, wherein the integrated circuitry is covered by a protective layer or coating for environmental insulation.

Additionally the present invention relates to a method for manufacturing a pressure sensing device with a sensor arrangement comprising:

- providing a support;
- providing a first pressure sensor and at least a second pressure sensor, the first and at least second pressure sensors being substantially identical;
- mounting the first and at least second sensors on the support,
- embedding the support and pressure sensors in an encapsulating package, and providing the encapsulating package with at least a first opening channel that is in communication with a sensing area of the first pressure sensor, and

further comprising:

mounting a covering connector over the encapsulating package, the covering connector comprising at least a first nozzle, arranged, when mounted, at a position corresponding with a surface position of the first opening channel on the package, to have a fluidic communication between the first nozzle and the first opening channel in the encapsulating package.

## Brief description of drawings

The invention will be explained in more detail below with reference to drawings in which illustrative embodiments of the invention are shown.

Figure 1 schematically shows a cross-section of an embedded pressure sensor according to prior art;
Figure 2a - 2d schematically show a cross-section of a pressure sensing device according to a respective embodiment of the present invention;
Figure 3 schematically shows a cross-section of a pressure sensing device according to an embodiment of the present invention;
Figures 4a, 4b, 4c show a schematic layout of a pressure sensing device according to an embodiment of the invention;
Figure 5 schematically shows a pressure sensing device according to an embodiment comprising a covering connector element;
Figure 6a, 6b schematically show a pressure sensing device according to an embodiment comprising a covering connector element;
Figures 7 and 8 show a perspective view of a pressure sensing device according to an embodiment of the invention.

## Detailed description of exemplary embodiments

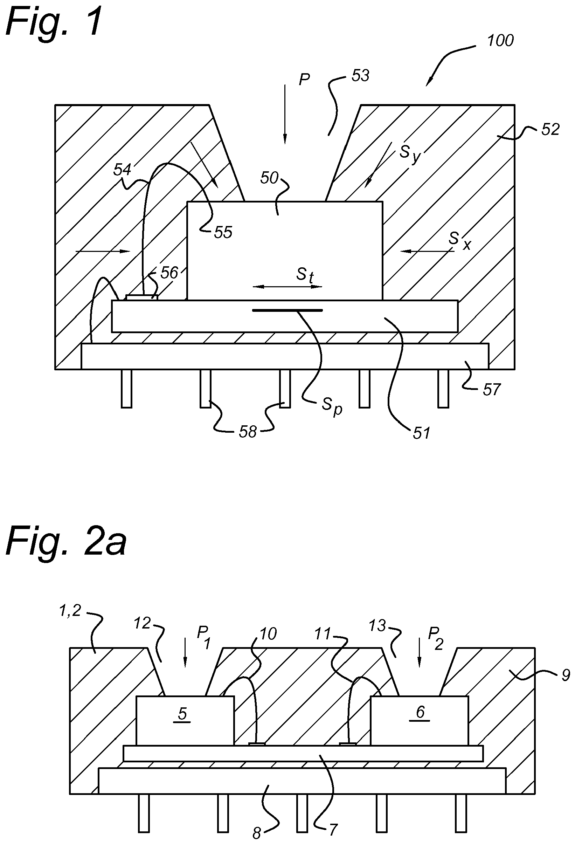

Figure 1 schematically depicts a cross-section of a pressure sensor 50 embedded in a package 100. The pressure sensor 50 is based on a capacitive or MEMS (microelectromechanical system) device technology.
MEMS sensors are typically based on piezoresistive technology; piezoresistive strain gauges may be formed by thin film deposition on a thin silicon diaphragm.
Typically the pressure sensor 50 is arranged (mounted) on an integrated circuit 51. Terminals 56 on the integrated circuit have respective electrical connections 54 with an associated terminal 55 on the pressure sensor. The electrical connections are typically formed by wire bonding or TSV (Through Silicon Vias). The integrated circuit 51 has further electrical connections 59 to associated terminals on a lead frame 57 equipped with pins 58 for external contacts.
The arrangement of the pressure sensor, the integrated circuit and the lead frame is embedded in an encapsulating package 52, i.e. a housing consisting of either ceramic or plastic material, which substantially isolates the arrangement from the exterior, except for the pins of the lead frame. In the encapsulating package, an opening channel 53 is provided to have communication between the exterior pressure P and a sensing area (not indicated) on the pressure sensor 50.
It is observed that due to the manufacturing process of the encapsulating package, the pressure sensor 50 is subjected to a mechanical stress field in the package material, symbolically indicated by arrows Sx, Sy.
The mechanical stress can occur by various mechanisms as known by the skilled person, e.g. difference in thermal expansion (coefficient) between the various components, a phase transition in package material, material curing shrinkage etc. As will be appreciated, a shape of the mechanical stress field and a level of stress on the pressure sensor or its components are not necessarily known quantitatively.
The mechanical stresses influence the mechanical properties of the pressure sensor, i.e. the construction of the sensor is pre-stressed. As a result, pressure measurement of the sensor will be influenced (biased) in some manner, probably resulting in a measured pressure offset due to the mechanical stress field in the package. It is assumed that at a given temperature the pressure sensor generates an output signal O that consists of a sum of a measured signal M proportional to the pressure P and an offset signal E induced by the mechanical stress field:

$$O = M + E \quad [eq1].$$

To overcome inaccuracy induced by the mechanical stress field in the package, the present invention provides a pressure sensing device which comprises at least a pair of pressure sensors both embedded in a substantially same manner in the encapsulating package. Both pressure sensors are mounted similarly, optionally on the integrated circuit, in the encapsulating package. It is anticipated that both pressure sensors are thus exposed to substantially identical conditions regarding the mechanical stress field.
In a further embodiment, the pressure sensors are arranged in a substantially symmetrical position with respect to the centre of the package, which would also take into account a dependence of the mechanical stress field relating to a position on the package. By a substantially symmetrical arrangement of the pressure sensors the mechanical stress field can still be compensated. The skilled in the art will appreciate that in practical situations the stress field may show relatively small variations as a function of the location in the package, thus variations of the mechanical stress value with the location in the package may be relatively low, which would allow variation of the positions of the pressure sensors relative to the symmetry centre and/or to each other.

The present invention further provides that the integrated circuit is arranged to produce a signal based on a difference between the output signal of one pressure sensor and the output signal of the other sensor. In this manner the signal produced by the integrated circuit has cancelled out the offset signal caused by the mechanical stress field.

Figures 2a - 2d schematically shows a cross-section of a pressure sensing device according to a respective embodiment of the present invention.

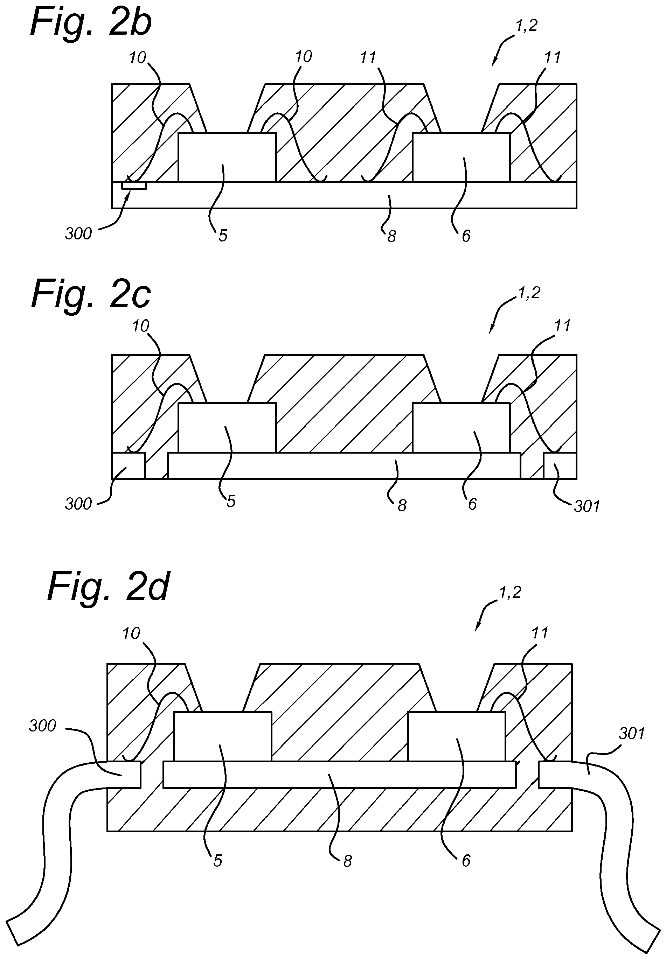

Figure 2a shows a cross-section of a pressure sensing device having sensors mounted on a support comprising integrated circuitry. Figure 2b shows a cross-section of a pressure sensing device having sensors mounted on a support comprising a printed circuit board, flex or ceramic. Figure 2c shows a cross-section of a pressure sensing device having sensors mounted on a support with a leadframe in a leadless package, and Figure 2d shows a cross-section of a pressure sensing device having sensors mounted on a support with a lead frame in a leaded package.

The pressure sensing device 1, 2 according to the invention comprises at least a pair of pressure sensors 5, 6 which are substantially identical sensors.

The two pressure sensors 5, 6 are arranged in the encapsulating package in such a manner that both sensors are exposed to substantially same mechanical stress field conditions. This can be achieved by a symmetric arrangement of the sensors relative to a centre of the package. The symmetric arrangement may include that the sensors are arranged in a mirrored or rotational-symmetric position relative to said centre.

Both pressure sensors 5 and 6 are mounted on a support, e.g., a mounting plate 7, an interposer element provided with an electrical wiring pattern 7 or integrated circuit 7. Sensor 5 and 6 are electrically connected to the interposer element or integrated circuit, each by one or more electrical connections 10 and 11.

Preferably, the wiring of the electric connections is arranged symmetrically with respect to the centre of the package.

The mounting element 7, interposer element 7 or integrated circuit 7 is mounted on a carrier e.g., a lead frame 8 or PCB (printed circuit board) or flex or ceramic or interposer.

In case of a mounting support electrical connections are present from the sensors to associated pins of the carrier 8.

In case of an interposer element 7 provided with an electrical wiring pattern or in case of an integrated circuit 7 the electrical connections (not shown) are present between terminals (not shown) on the integrated circuit and associated pins of the carrier 8.

The first and second pressure sensors 5, 6, mounting plate, interposer or integrated circuit 7 and the carrier 8 are embedded in an encapsulating package 9.

It will be appreciated that according to this embodiment the integrated circuitry 7 functions as a processing device such that signals from the first and second pressure sensors 5, 6 can be processed within the encapsulating package 9.

In an alternative embodiment, the interposer 7 redistributes the signals from the first and second pressure sensors 5, 6 to associated pins of the carrier 8. The integrated circuitry can be external from the encapsulating package 9.

In an alternative embodiment, the mounting plate functions as solid base plate in order to have material properties e.g., thermal expansion, close or equal to the material properties of the pressure sensor material. In an embodiment, the material of the mounting plate is selected based on the material properties more in particular the thermal expansion coefficient to allow a reduction of stresses caused during production and/or use.

Electrical connections are present between sensor terminals and associated pins 300, 301 of the carrier 8. Signal processing by the integrated circuitry can be external from the encapsulating package 9.

In an alternative embodiment, the sensor 5 and 6 are mounted on the carrier 8 directly (see Figure 2b, 2c and 2d).

Electrical connections are present between sensor terminals and associated pins 300 of the carrier 8. Signal processing by the integrated circuitry can be external from the encapsulating package 9.

The encapsulating package 9 further comprises a first opening channel 12 to allow communication of a first external pressure PI with a sensing area of the first pressure sensor 5, and a second opening channel 13 to allow communication of a second external pressure P2 with a sensing area of the second pressure sensor 6.

The integrated circuit (located either internal in or external of the package) receives a first output signal O1 from the first pressure sensor 5 and a second output signal O2 from the second pressure sensor 6.

As mentioned above the first output signal O1 comprises a first measured signal M1 based on the pressure PI and an offset signal E1 induced by the mechanical stress field:

$$O1 = M1 + E1 \qquad [eq2].$$

Likewise, the second output signal comprises a second measured signal M2 based on the pressure P2 and an offset signal E2 induced by the mechanical stress field:

$$O2 = M2 + E2 \qquad [eq3].$$

The integrated circuit determines a difference signal:

$$D = O1 - O2 = (M1 - M2) + (E1 - E2) \qquad [eq4].$$

In accordance with the present invention since both pressure sensors are substantially identical and under substantially same conditions of mechanical stress and temperature in the encapsulating package, offset signals E1 and E2 have substantially same values and thus cancel each other in the difference signal D:

$$D = O1 - O2 = M1 - M2 \qquad [eq5].$$

According to the invention, the first and second pressure sensors are absolute pressure sensors. Thus, the configuration of the pressure sensing device according to this embodiment provides a differential pressure sensing device 1 which can measure a difference between two pressures PI and P2.

Hence, according to eq1 - eq5, the difference signal D is proportional to the difference of the first pressure P1 and second pressure P2.

Also, when the second pressure P2 is atmospheric pressure, the pressure sensing device according to this embodiment can function as a pressure gauge 2 for measuring a pressure difference between the first pressure PI and atmospheric pressure P2. In this embodiment, the difference signal D is proportional to the difference of the first pressure PI and atmospheric pressure, according to eq1 - eq5.

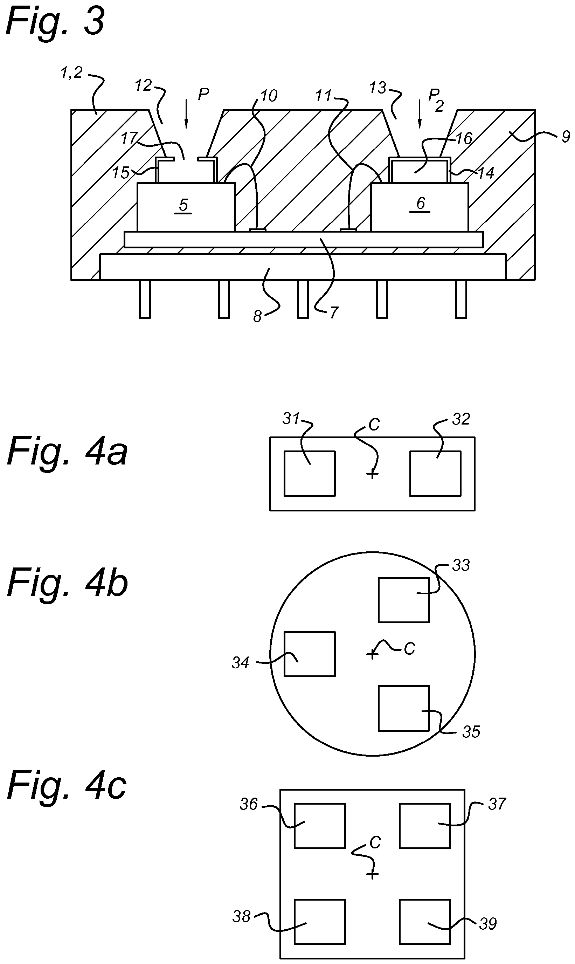

Figure 3 schematically shows a cross-section of a pressure sensing device according to an embodiment of the present invention.

In this embodiment, the pressure sensing device is arranged for measurement of absolute pressure relative to vacuum. The second pressure sensor 6 is arranged to measure vacuum pressure on the sensing area. Therefore, the sensing area of the second pressure sensor 6 is covered and sealed by a cap 14, which provides a closed volume 16 above the sensing area that seals the sensing area from the second opening channel 13 above the second pressure sensor 6.

The closed volume 16 is provided with a vacuum pressure. Such vacuum pressure can be obtained during the manufacturing procedure of the MEMS based pressure sensor by exposing the sensor to vacuum pressure when forming the cap 14.

In order to have substantially similar stress conditions on the first pressure sensor 5, the first pressure sensor also comprises a cap 15, for example a glass cap, which covers the sensing area of the first pressure sensor 5. In the cap 15 of the first pressure sensor 5, a small hole 17 is arranged to provide an opening between the sensing area of the first pressure sensor 5 and the first opening channel 12.

The caps 14, 15 are manufactured during fabrication of the MEMS based pressure sensors 5, 6 consisting of a material compatible with the material of the sensors and/or with the processing technology to create the sensors 5, 6.

In this embodiment, the integrated circuit (located either internal or external of the package) receives a first output signal O1 from the first pressure sensor 5 and a second output signal O2 from the second pressure sensor 6.

The first output signal O1 is defined by eq2. The second output signal O2 comprises a second measured signal M2 based on vacuum pressure V and an offset signal E2 induced by the mechanical stress field:

$$O2 = V + E2 \qquad [eq6]$$

with offset E1 substantially equal to offset E2.

The integrated circuit thus determines a difference signal in which the offsets E1 and E2 cancel each other out:

$$D = O1 - O2 = (M1 - V) + (E1 - E2) = M1 - V \quad [eq7],$$

The difference signal is proportional to the difference to the measured pressure PI and the imposed vacuum V.

Figures 4a, 4b, 4c show a schematic layout of a pressure sensing device according to an embodiment of the invention. As described above, the pressure sensing device is arranged to have an internal compensation of stress induced deviations for a pair of pressure sensors embedded in the encapsulating package. The internal compensation is obtained by determining a difference signal from the output signals of the two pressure sensors within the encapsulating package under the condition that both embedded pressure sensors are exposed to a substantially same or similar mechanical stress field. To reach such a condition, the two pressure sensors are arranged in the package at positions that may have a similar stress field. These positions are arranged symmetrically in the package with respect to each other, preferably in mirrored positions relative to the (symmetry) centre C of the package.

In an embodiment, the support 7 for the pressure sensors will be arranged in a manner that a centre of the support 7 coincides with the centre of the package 9.

Also, the wiring of the pressure sensor should preferably be mirrored with respect to the centre to have any stress due to wiring being mirrored as well.

The package may have various layouts e.g. rectangular, circular and square. Figure 4a shows a rectangular layout in which according to an embodiment two positions 31, 32 for pressure sensors are shown at either side of the centre of the package.

Figure 4b shows a circular layout in which according to an embodiment three positions 33, 34, 35 for pressure sensors are shown around the centre C at substantially an inscribed angle of 120°.

Figure 4c shows a square layout in which according to an embodiment four positions 36, 37, 38, 39 for pressure sensors are shown around the centre C at substantially an inscribed angle of 90°.

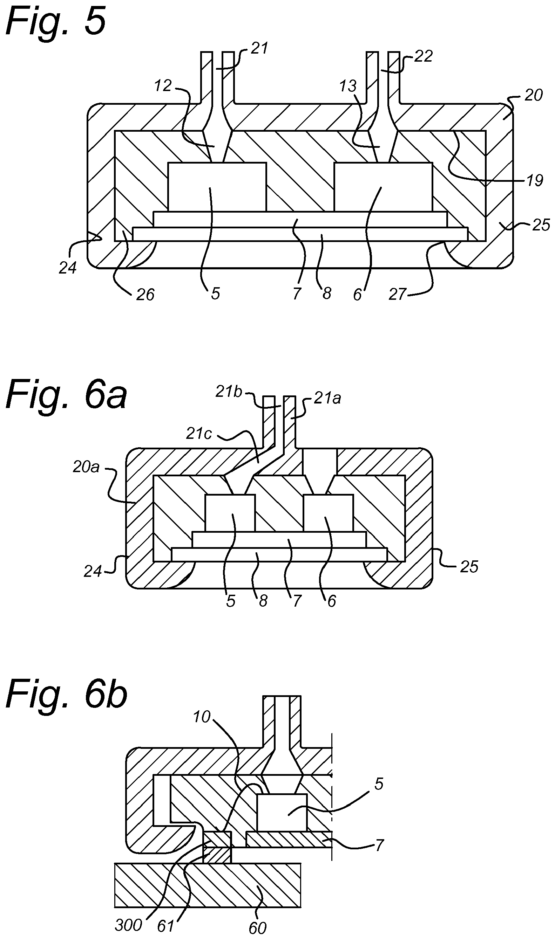

Figure 5 schematically shows a pressure sensing device according to an embodiment comprising a covering connector element.

The pressure sensing device according to the invention comprises a connector 20 that covers the surface of the pressure sensing device in which the opening channels 12, 13 are located. The cover 20 comprises a first and second conduit 21, 22 that are in communication with the first and second opening channel 12, 13 respectively. The conduits 21, 22 may be shaped as tube ends on which a further hose or tube (not shown) can be connected.

The connector 20 comprises clamps 24, 25 that are arranged to clamp the connector on edges 26, 27 of the encapsulating package. For example the clamps 24, 25 can be arranged for sliding along or clipping around the edges of the package.

The connector 20 is designed in such a manner that no contribution is made to the mechanical stress field in the package. Therefore, the conduits are positioned substantially symmetrical relative to the package.

Figures 6a and 6b schematically show a pressure sensing device according to an embodiment comprising a covering connector element and a detail of such device, respectively. In the event that the pressure sensing device is arranged in accordance with the embodiment shown in Figure 3 to measure a pressure PI against vacuum V, the covering connector 20a only requires a single conduit 21 that is in fluid communication with the opening channel 12 of the first pressure sensor 5. According to an embodiment, the first conduit 21a is positioned at a substantially central position to obtain a symmetrical shape of the cover. The conduit 21a comprises a skewed portion 21b to provide communication between a central channel 21c in the conduit and the opening channel 12 of the first pressure sensor 5.

In Figure 6b, a detail is shown of the pressure sensing device mounted on a printed circuit board of a product. A pin 300 of the carrier is connected to a terminal (not shown) of the PCB 60 by a solder 61.

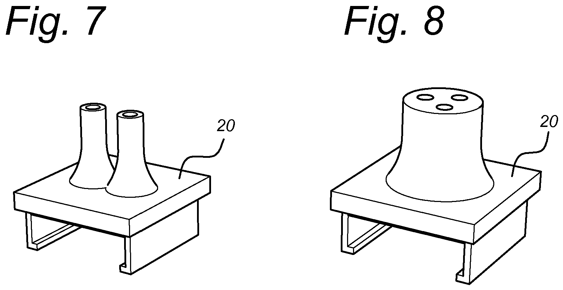

Figures 7 and 8 show three-dimensional impressions of a covering connector for a pressure sensing device in accordance with the present invention.

The covering connector can be manufactured from a thermoplastic material for example by moulding or by 3D printing.

## Claims

1. Pressure sensing device with a sensor arrangement comprising a first pressure sensor (5), at least a second pressure sensor (6) and a support (7),
   each sensor being substantially identical and being surface-mounted onto the support;
   the sensor arrangement being embedded in an encapsulating package (9), wherein
   the encapsulating package (9) is provided with at least a first opening channel (12) that is in communication with a sensing area of the first pressure sensor (5), and

further comprising a covering connector (20; 20a) mounted over the encapsulating package (9), the covering connector (20; 20a) comprising at least a first nozzle (21; 21a), arranged, when mounted, at a position corresponding with a surface position of the first opening channel (12) on the package, to have a fluidic communication between the first nozzle (21; 21a) and the first opening channel (12) in the encapsulating package (9).

2. Pressure sensing device according to claim 1, comprising an integrated circuitry, wherein the first pressure sensor (5) is connected to a first input and the second pressure sensor (6) being connected to a second input respectively of the integrated circuitry (7);
and the integrated circuitry is configured to determine a difference signal (D) from a first pressure based electric signal (O1) from the first pressure sensor (5) received at the first input and a second pressure based electric signal (O2) from the second pressure sensor (6) received at the second input.

3. Pressure sensing device according to claim 2, wherein the integrated circuitry is arranged on the support (7).

4. Pressure sensing device according to claim 2, wherein the integrated circuitry is remote from the encapsulating package (9).

5. Pressure sensing device according to claim 1 or claim 2, wherein the first and at least second pressure sensors (5, 6) are arranged symmetrically relative to a centre of the support, and the centre of the support substantially coincides with the centre of the package (9).

6. Pressure sensing device according to any one of claims 1-5, wherein the second pressure sensor (6) is provided with a closed space (16) between a glass cover (14) and the sensing area, the closed space being arranged at low pressure, substantially vacuum.

7. Pressure sensing device according to claim 6, wherein the first pressure sensor (5) is provided with a glass cover (15) covering the sensing area of the first pressure sensor, the glass cover (15) being provided with a hole (17) in such a way that the sensing area is in communication with the first opening channel (12).

8. Pressure sensing device according to claim 6 or claim 7, wherein the encapsulating package (9) is provided with a second opening channel (13) that is in communication with an exterior surface of the glass cover (14) of the second pressure sensor (6).

9. Pressure sensing device according to any one of claims 1-5, wherein the encapsulating package (9) is provided with a second opening channel (13) that is in communication with a sensing area of the second pressure sensor (6).

10. Pressure sensing device according to any one of the preceding claims 1- 9, wherein the opening channel (12) has or the opening channels (12, 13) have a width equal to or smaller than a sensing area size of the first and/or at least second sensor.

11. Pressure sensing device according to claim 1 as far as dependent on claim 8 or claim 9, wherein the covering connector (20; 20a) comprises a second nozzle (22), arranged, when mounted, at a position corresponding with a surface position of the second opening channel (13) on the package (9), to have a fluidic communication between the second nozzle (22) and the second opening channel (13) in the encapsulating package (9).

12. Pressure sensing device according to claim 1 or claim 11, wherein the covering connector (20, 20a) comprises clamping means (24, 25) for creating a clamping connection of the cover on the pressure sensing device.

13. Pressure sensing device according to claim 1 or claim 11 or claim 12, wherein a sealing inbetween the covering connector (20; 20a) and the package (9) is realized by a sealing means comprising an O-ring, a glue layer or a sealant layer.

14. Pressure sensing device according to any one of the preceding claims 1-13, wherein the integrated circuitry is covered by a protective layer or coating for environmental insulation.

15. Method for manufacturing a pressure sensing device with a sensor arrangement comprising:

    - providing a support;

- providing a first pressure sensor (5) and at least a second pressure sensor (6), the first and at least second pressure sensors being substantially identical;
- mounting the first and at least second sensors on the support,
- embedding the support and pressure sensors (5, 6) in an encapsulating package (9) in a manner that the first and at least second sensors are arranged symmetrically relative to a centre of the package, and

providing the encapsulating package (9) with at least a first opening channel (12) that is in communication with a sensing area of the first pressure sensor (5), and
further comprising:

mounting a covering connector (20; 20a) over the encapsulating package (9), the covering connector (20; 20a) comprising at least a first nozzle (21; 21a), arranged, when mounted, at a position corresponding with a surface position of the first opening channel (12) on the package, to have a fluidic communication between the first nozzle (21; 21a) and the first opening channel (12) in the encapsulating package (9).

## Patentansprüche

1. Druckmessvorrichtung mit einer Sensoranordnung mit einem ersten Drucksensor (5), wenigstens einem zweiten Drucksensor (6) und einem Träger (7),
wobei jeder Sensor im Wesentlichen identisch und auf einer Oberfläche des Trägers angebracht ist,
wobei die Sensoranordnung in eine Verkapselung (9) eingebettet ist,
wobei die Verkapselung (9) mit wenigstens einem Öffnungskanal (12) versehen ist, der in Verbindung mit einer Sensorfläche des ersten Drucksensors (5) steht, und
wobei die Druckmessvorrichtung weiter einen abdeckenden Verbinder (20; 20a) aufweist, der über der Verkapselung (9) angebracht ist, wobei der abdeckende Verbinder (20; 20a) wenigstens einen ersten Stutzen (21; 21a) aufweist, der im montierten Zustand an einer Position angeordnet ist, die einer Oberflächenposition des ersten Öffnungskanals (12) an der Einkapselung entspricht, um Fluidverbindung zwischen dem ersten Stutzen (21; 21a) und dem ersten Öffnungskanal (12) in der Einkapselung (9) zu haben.

2. Druckmessvorrichtung nach Anspruch 1, die eine integrierte Schaltung aufweist, wobei der erste Drucksensor (5) mit einem ersten Eingang und der zweite Drucksensor (6) mit einem zweiten Eingang der integrierten Schaltung (7) verbunden ist,
und wobei die integrierte Schaltung dazu ausgestaltet ist, um ein Differenzsignal (D) aus einem ersten Druck auf Grundlage eines elektrischen Signals (O1) von dem ersten Drucksensor (5), das an dem ersten Eingang empfangen wurde, und einem zweiten Druck auf Grundlage eines elektrischen Signals (O2) von dem zweiten Drucksensor (6) zu bestimmen, das an dem zweiten Eingang empfangen wurde.

3. Druckmessvorrichtung nach Anspruch 2, wobei die integrierte Schaltung auf dem Träger (7) angeordnet ist.

4. Druckmessvorrichtung nach Anspruch 2, wobei die integrierte Schaltung sich auf Abstand zu der Verkapselung (9) befindet.

5. Druckmessvorrichtung nach Anspruch 1 oder Anspruch 2, wobei der erste und der wenigsten eine zweite Drucksensor (5, 6) symmetrisch relativ zu einem Zentrum des Trägers angeordnet sind und wobei das Zentrum des Trägers im Wesentlichen mit dem Zentrum der Verkapselung (9) zusammenfällt.

6. Druckmessvorrichtung nach einem der Ansprüche 1-5, wobei der zweite Drucksensor (6) mit einem geschlossenen Raum (16) zwischen einem Glasdeckel (14) und der Sensorfläche versehen ist, wobei der geschlossene Raum unter niedrigem Druck, im Wesentlichen unter Vakuum gehalten ist.

7. Druckmessvorrichtung nach Anspruch 6, wobei der erste Drucksensor (5) mit einem Glasdeckel (15) versehen ist, der die Sensorfläche des ersten Drucksensors überdeckt, wobei der Glasdeckel (15) in solcher Weise mit einer Öffnung (17) versehen ist, dass die Sensorfläche in Verbindung mit dem ersten Öffnungskanal (12) steht.

8. Druckmessvorrichtung nach Anspruch 6 oder Anspruch 7, wobei die Verkapselung (9) mit einem zweiten Öffnungskanal (13) versehen ist, der in Verbindung mit einer äußeren Oberfläche des Glasdeckels (14) des zweiten Drucksensors (6) steht.

9. Druckmessvorrichtung nach einem der Ansprüche 1-5, wobei die Verkapselung (9) mit einem zweiten Öffnungskanal (13) versehen ist, der in Verbindung mit einer Sensorfläche des zweiten Drucksensors (6) steht.

10. Druckmessvorrichtung nach einem der vorhergehenden Ansprüche 1-9, wobei der Öffnungskanal (12) oder die Öffnungskanäle (12, 13) eine Breite haben, die gleich ist oder kleiner ist als eine Sensorflächengröße des ersten und/oder wenigstens einen zweiten Sensors.

11. Druckmessvorrichtung nach Anspruch 1, wenn abhängig von Anspruch 8 oder Anspruch 9, wobei der abdeckende Verbinder (20; 20a) einen zweiten Stutzen (22) aufweist, der im montierten Zustand an einer Position angeordnet ist, die einer Oberflächenposition des zweiten Öffnungskanals (13) an der Verkapselung (9) entspricht, um Fluidverbindung zwischen dem zweiten Stutzen (22) und dem zweiten Öffnungskanal (13) in der Verkapselung (9) zu haben.

12. Druckmessvorrichtung nach Anspruch 1 oder Anspruch 11, wobei der abdeckende Verbinder (20, 20a) eine Klemmeinrichtung (24, 25) aufweist, um eine Klemmverbindung der Abdeckung auf der Druckmessvorrichtung herzustellen.

13. Druckmessvorrichtung nach Anspruch 1 oder Anspruch 11 oder Anspruch 12, wobei eine Dichtung zwischen dem abdeckenden Verbinder (20; 20a) und der Verkapselung (9) durch ein Dichtungsmittel realisiert ist, das einen O-Ring, eine Klebeschicht oder eine Dichtungslage aufweist.

14. Druckmessvorrichtung nach einem der vorhergehenden Ansprüche 1-13, wobei die integrierte Schaltung durch eine Schutzlage oder -beschichtung zur Isolierung gegenüber der Umgebung abgedeckt ist.

15. Verfahren zum Herstellen einer Messvorrichtung mit einer Sensoranordnung, bei dem:

ein Träger bereitgestellt wird,
ein erster Drucksensor (5) und wenigstens ein zweiter Drucksensor (6) bereitgestellt werden, wobei der erste und wenigstens eine zweite Drucksensor im Wesentlichen identisch sind,
der erste und der wenigstens eine zweite Drucksensor auf dem Träger angebracht werden,
der Träger und die Drucksensoren (5, 6) in eine Verkapselung (9) in einer solchen Weise eingebettet werden, dass der erste und der wenigstens eine zweite Drucksensor symmetrisch relativ zu einem Zentrum der Verkapselung angeordnet sind, und
die Verkapselung (9) mit wenigstens einem Öffnungskanal (12) versehen wird, der in Verbindung mit einer Sensorfläche des ersten Drucksensors (5) steht,

und bei dem weiter:

über der Verkapselung (9) ein abdeckender Verbinder (20; 20a) angebracht wird, wobei der abdeckende Verbinder (20; 20a) wenigstens einen ersten Stutzen (21; 21a) aufweist, der im montierten Zustand an einer Position angeordnet ist, die einer Oberflächenposition des ersten Öffnungskanals (12) an der Verkapselung entspricht, um eine Fluidverbindung zwischen dem ersten Stutzen (21; 21a) und dem ersten Öffnungskanal (12) in der Verkapselung (9) zu haben.

**Revendications**

1. Dispositif de détection de pression avec agencement de capteurs comprenant un premier capteur de pression (5), au moins un second capteur de pression (6) et un support (7),
chaque capteur étant sensiblement identique et étant monté en surface sur le support ;
l'agencement de capteur étant encastré dans un boîtier d'encapsulation (9), dans lequel
le boîtier d'encapsulation (9) est doté d'au moins un premier canal d'ouverture (12) qui est en communication avec une zone de détection du premier capteur de pression (5), et
comprenant en outre un connecteur de couverture (20 ; 20a) monté sur le boîtier d'encapsulation (9), le connecteur de couverture (20 ; 20a) comprenant au moins une première buse (21 ; 21a), agencée, lorsqu'elle est montée, dans une position correspondant à une position en surface du premier canal d'ouverture (12) sur le boîtier, de sorte à assurer une communication fluidique entre la première buse (21 ; 21a) et le premier canal d'ouverture (12) dans le boîtier d'encapsulation (9).

**2.** Dispositif de détection de pression selon la revendication 1, comprenant de circuit intégré, dans lequel le premier capteur de pression (5) est branché sur une première entrée et le second capteur de pression (6) étant branché respectivement sur une seconde entrée de circuit intégré (7) ;

et le circuit intégré est configuré pour déterminer un signal différentiel (D) à partir d'un signal électrique sur la base d'une première pression (O1) provenant du premier capteur de pression (5) reçu sur la première entrée et d'un second signal électrique sur la base d'une seconde pression (O2) provenant du second capteur de pression (6) reçu sur la seconde entrée.

**3.** Dispositif de détection de pression selon la revendication 2, dans lequel le circuit intégré est agencé sur le support (7).

**4.** Dispositif de détection de pression selon la revendication 2, dans lequel le circuit intégré est distant du boîtier d'encapsulation (9).

**5.** Dispositif de détection de pression selon la revendication 1 ou la revendication 2, dans lequel le premier et l'au moins un second capteurs de pression (5, 6) sont agencés symétriquement par rapport à un centre du support, et le centre du support coïncide sensiblement avec le centre du boîtier (9).

**6.** Dispositif de détection de pression selon l'une quelconque des revendications 1 à 5, dans lequel le second capteur de pression (6) est doté d'un espace fermé (16) entre un couvercle en verre (14) et la zone de détection, l'espace fermé étant agencé sous faible pression, sensiblement sous pression à vide.

**7.** Dispositif de détection de pression selon la revendication 6, dans lequel le premier capteur de pression (5) est doté d'un couvercle en verre (15) couvrant la zone de détection du premier capteur de pression, le couvercle en verre (15) étant doté d'un trou (17) de telle manière que la zone de détection est en communication avec le premier canal d'ouverture (12).

**8.** Dispositif de détection de pression selon la revendication 6 ou la revendication 7, dans lequel le boîtier d'encapsulation (9) est doté d'un second canal d'ouverture (13) qui est en communication avec une surface extérieure du couvercle en verre (14) du second capteur de pression (6).

**9.** Dispositif de détection de pression selon l'une quelconque des revendications 1 à 5, dans lequel le boîtier d'encapsulation (9) est doté d'un second canal d'ouverture (13) qui est en communication avec une zone de détection du second capteur de pression (6).

**10.** Dispositif de détection de pression selon l'une quelconque des revendications 1 à 9, dans lequel le canal d'ouverture (12) a ou les canaux d'ouverture (12, 13) ont une largeur inférieure ou égale à une taille de zone de détection du premier et/ou de l'au moins un second capteur.

**11.** Dispositif de détection de pression selon la revendication 1 dans la mesure où elle est dépendante de la revendication 8 ou de la revendication 9, dans lequel le connecteur de couverture (20 ; 20a) comprend une seconde buse (22), agencée, lorsqu'elle est montée, dans une position correspondant à une position en surface du second canal d'ouverture (13) sur le boîtier (9), de sorte à assurer une communication fluidique entre la seconde buse (22) et le second canal d'ouverture (13) dans le boîtier d'encapsulation (9).

**12.** Dispositif de détection de pression selon la revendication 1 ou la revendication 11, dans lequel le connecteur de couverture (20, 20a) comprend des moyens de serrage (24, 25) pour créer une connexion de serrage du couvercle sur le dispositif de détection de pression.

**13.** Dispositif de détection de pression selon la revendication 1 ou la revendication 11 ou la revendication 12, dans lequel une étanchéité entre le connecteur de couverture (20 ; 20a) et le boîtier (9) est réalisée à l'aide de moyens d'étanchéité comprenant un joint torique, une couche de colle ou une couche de produit d'étanchéité.

**14.** Dispositif de détection de pression selon l'une quelconque des revendications précédentes 1 à 13, dans lequel le circuit intégré est couvert d'une couche ou d'un revêtement de protection destiné(e) à l'isolement environnemental.

**15.** Procédé de fabrication d'un dispositif de détection de pression à agencement de capteurs comprenant :

- la fourniture d'un support ;

- la fourniture d'un premier capteur de pression (5) et d'au moins un second capteur de pression (6), les premier et l'au moins un second capteurs de pression étant sensiblement identiques ;
- le montage du premier et de l'au moins un second capteurs sur le support,
- l'encastrement du support et des capteurs de pression (5, 6) dans un boîtier d'encapsulation (9) de manière à ce que le premier et l'au moins un second capteurs sont agencés symétriquement par rapport à un centre du boîtier, et

le fait de doter le boîtier d'encapsulation (9) d'au moins un premier canal d'ouverture (12) qui est en communication avec une zone de détection du premier capteur de pression (5), et

comprenant en outre :

le montage d'un connecteur de couverture (20 ; 20a) sur le boîtier d'encapsulation (9), le connecteur de couverture (20 ; 20a) comprenant au moins une première buse (21 ; 21a), agencée, lorsqu'elle est montée, dans une position correspondant à une position en surface du premier canal d'ouverture (12) sur le boîtier, de sorte à assurer une communication fluidique entre la première buse (21 ; 21a) et le premier canal d'ouverture (12) dans le boîtier d'encapsulation (9).

## Fig. 1

## Fig. 2a

*Fig. 2b*

*Fig. 2c*

*Fig. 2d*

## Fig. 3

## Fig. 4a

## Fig. 4b

## Fig. 4c

## Fig. 5

## Fig. 6a

## Fig. 6b

*Fig. 7*

*Fig. 8*

**EP 2 910 919 B1**

**REFERENCES CITED IN THE DESCRIPTION**

**Patent documents cited in the description**

- US 8402835 B
- WO 2000037912 A